# EUROPÄISCHE PATENTSCHRIFT

(11) **EP 2 745 991 B1**
(45) Veröffentlichungstag und Bekanntmachung des Hinweises auf die Patenterteilung: **15.12.2021**
(21) Anmeldenummer: 13182912.9
(22) Anmeldetag: 04.09.2013
(51) Int. Cl.: B25F 3/00

(54) **Werkzeugvorsatz für eine Handwerkzeugmaschine**
Tool attachment for a manual tool machine
Ensemble d'outils pour une machine-outil manuelle

(30) Priorität: 15.11.2012 DE 102012220915; 15.07.2013 DE 102013213814
(43) Veröffentlichungstag der Anmeldung: 25.06.2014
(73) Patentinhaber: Robert Bosch GmbH, 70442 Stuttgart (DE)
(72) Erfinder: Tussing, Torsten, 73257 Koengen (DE)

(56) Entgegenhaltungen:
- DE-A1- 10 125 418
- DE-A1- 10 151 581
- DE-A1-102010 030 433
- DE-B3-102004 006 205
- None

## Beschreibung

### Stand der Technik

Die vorliegende Erfindung betrifft einen Werkzeugvorsatz mit einer drehend antreibbaren Antriebswelle und einem Verriegelungsabschnitt zur Verriegelung an einer Befestigungsschnittstelle einer Handwerkzeugmaschine, die eine Werkzeugaufnahme mit einem Aufnahmekörper zur Aufnahme eines Einsatzwerkzeugs und eine von einem ersten Federelement in eine von der Handwerkzeugmaschine wegweisende axiale Richtung vorgespannte, erste Verriegelungshülse aufweist.

Aus dem Stand der Technik sind derartige Werkzeugvorsätze bekannt, die mit einem zugeordneten Verriegelungsabschnitt an einer Befestigungsschnittstelle einer entsprechenden Handwerkzeugmaschine verriegelbar sind. Hierbei greift eine dem Werkzeugvorsatz zugeordnete Antriebswelle in eine der Handwerkzeugmaschine zugeordnete und mit einer federbeaufschlagten Verriegelungshülse versehene Werkzeugaufnahme unabhängig von einer jeweiligen Stellung der Verriegelungshülse ein, um eine Drehmomentübertragung von der Werkzeugaufnahme auf die Antriebswelle zu ermöglichen. Ein aus dem Stand der Technik bekannter Werkzeugvorsatz gemäß der Präambel des Anspruchs 1 ist aus der DE 10 2010 030 433 bekannt.

Nachteilig am Stand der Technik ist, dass bei derartigen Werkzeugvorsätzen ein vergleichsweise großes radiales und tangentiales Spiel zwischen der Antriebswelle und der Werkzeugaufnahme vorhanden sein muss, um z. B. ein Eingreifen der Antriebswelle in die Werkzeugaufnahme in deren verriegeltem Zustand zu ermöglichen.

### Offenbarung der Erfindung

Eine Aufgabe der Erfindung ist es daher, einen neuen Werkzeugvorsatz zur Verriegelung an einer Handwerkzeugmaschine bereitzustellen, wobei zumindest eine Reduzierung eines zwischen einer Antriebswelle des Werkzeugvorsatzes und einer Werkzeugaufnahme der Handwerkzeugmaschine vorliegenden, tangentialen und radialen Spiels ermöglicht werden kann.

Dieses Problem wird gelöst durch einen Werkzeugvorsatz gemäß Anspruch 1.

Die Erfindung ermöglicht somit die Bereitstellung eines Werkzeugvorsatzes, bei dem durch eine Betätigung der Verriegelungshülse einer der Handwerkzeugmaschine zugeordneten Werkzeugaufnahme durch ein dem Werkzeugvorsatz zugeordnetes Betätigungsglied zur Montage des Werkzeugvorsatzes die Werkzeugaufnahme entriegelbar ist, und somit eine Reduzierung eines zwischen einer Antriebswelle des Werkzeugvorsatzes und einer Werkzeugaufnahme der Handwerkzeugmaschine vorliegenden, tangentialen und radialen Spiels ermöglicht werden kann.

Gemäß einer Ausführungsform umgreift das Betätigungsglied die Antriebswelle zumindest abschnittsweise hülsenförmig.

Somit kann ein robustes und kostengünstiges Betätigungsglied bereitgestellt werden.

Bevorzugt sind die Antriebswelle und das Betätigungsglied einstückig ausgebildet.

Somit kann die Bereitstellung eines unkomplizierten Bauteils zur Realisierung der Antriebswelle und des Betätigungsglieds ermöglicht werden, das bei der Herstellung des Werkzeugvorsatzes schnell und einfach in diesem montierbar ist.

Gemäß einer Ausführungsform ist die Antriebswelle drehbeweglich in einem Grundkörper gelagert, der einen inneren Hohlraum ausbildet und an dessen Außenumfang eine zur Freigabe von mindestens einem Verriegelungselement gegen eine Federkraft eines zweiten Federelements axial verschiebbare, zweite Verriegelungshülse angeordnet ist. Die zweite Verriegelungshülse ist von dem zweiten Federelement in eine von dem Werkzeugvorsatz wegweisende axiale Richtung vorgespannt, die bei einer Befestigung des Werkzeugvorsatzes an der Handwerkzeugmaschine in Richtung der Handwerkzeugmaschine weist.

Die Erfindung ermöglicht somit die Bereitstellung eines sicheren und zuverlässigen Verriegelungsabschnitts für den Werkzeugvorsatz.

Bevorzugt wirken die Federkräfte des ersten und zweiten Federelements bei der Befestigung des Werkzeugvorsatzes an der Handwerkzeugmaschine in einander entgegengesetzte Richtungen.

Somit kann ein Werkzeugvorsatz mit einer vergleichsweise kurzen Baulänge bereitgestellt werden.

Das mindestens eine Verriegelungselement weist bevorzugt mindestens eine, zumindest abschnittsweise in eine zugeordnete, radiale Öffnung des Grundkörpers eingreifende Verriegelungskugel auf.

Somit können robuste und kostengünstige Verriegelungselemente bereitgestellt werden.

Gemäß einer Ausführungsform ist das Betätigungsglied dazu ausgebildet, eine Federbeaufschlagung des Werkzeugvorsatzes durch das erste Federelement über die erste Verriegelungshülse im montierten Zustand des Werkzeugvorsatzes an der Handwerkzeugmaschine in der von der Handwerkzeugmaschine wegweisenden axialen Richtung zu ermöglichen.

Die Erfindung ermöglicht somit die Bereitstellung eines Werkzeugvorsatzes, bei dem die Federkraft des der Werkzeugaufnahme der Handwerkzeugmaschine zugeordneten Federelements einerseits zur Unterstützung bei der axialen Zentrierung des Werkzeugvorsatzes an der Handwerkzeugmaschine und andererseits beim Abnehmen des Werkzeugvorsatzes von der Handwerkzeugmaschine Anwendung findet.

Die Antriebswelle ist bevorzugt ausschließlich zur Drehmomentübertragung in dem Aufnahmekörper aufnehmbar.

Somit erfolgt eine axiale Zentrierung sowie eine tangential und radial spielfreie Fixierung des Werkzeugvorsatzes ausschließlich ohne ein Hinzutun der Antriebswelle.

Gemäß einer Ausführungsform ist der Werkzeugvorsatz nach Art eines Bohrfutteradapters oder eines Winkelvorsatzes ausgebildet.

Somit kann ein Verriegelungsabschnitt für einen Werkzeugvorsatz bereitgestellt werden, der bei einer Vielzahl unterschiedlicher Werkzeugvorsätze Anwendung finden kann.

Gemäß einer Ausführungsform weist der Verriegelungsabschnitt mindestens ein nach Art eines Bajonetts ausgebildetes Halteglied zur verdrehgesicherten Befestigung und Verriegelung an der Befestigungsschnittstelle der Handwerkzeugmaschine auf.

Somit kann der Werkzeugvorsatz auf einfache Art und Weise sicher und zuverlässig über eine Bajonettverbindung an der Handwerkzeugmaschine befestigt und verriegelt werden.

Das Eingangs genannte Problem wird auch gelöst durch ein Werkzeugsystem mit einer Handwerkzeugmaschine und einem Werkzeugvorsatz zur Befestigung an der Handwerkzeugmaschine, die mit einer Werkzeugaufnahme versehen ist, die einen Aufnahmekörper zur Aufnahme eines Einsatzwerkzeugs und eine von einem ersten Federelement in eine von der Handwerkzeugmaschine wegweisende axiale Richtung vorgespannte, erste Verriegelungshülse aufweist. Der Werkzeugaufnahme ist eine Befestigungsschnittstelle zur Befestigung des mit einer drehend antreibbaren Antriebswelle und einem Verriegelungsabschnitt zur Verriegelung an der Befestigungsschnittstelle versehenen Werkzeugvorsatzes zugeordnet. Der Werkzeugvorsatz weist ein Betätigungsglied auf, das dazu ausgebildet ist, die erste Verriegelungshülse bei einer Befestigung des Werkzeugvorsatzes an der Handwerkzeugmaschine gegen eine von dem ersten Federelement aufgebrachte Federkraft in Richtung der Handwerkzeugmaschine zu verschieben.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht einer Handwerkzeugmaschine mit einer Werkzeugaufnahme und einer Befestigungsschnittstelle gemäß einer Ausführungsform,
Fig. 2 eine Schnittansicht eines Werkzeugvorsatzes gemäß einer ersten Ausführungsform,
Fig. 3 eine Schnittansicht eines Werkzeugsystems gemäß einer ersten Ausführungsform mit der Handwerkzeugmaschine von Fig. 1 und dem Werkzeugvorsatz von Fig. 2 bei einer beispielhaften Befestigung des Werkzeugvorsatzes an der Handwerkzeugmaschine,
Fig. 4 die Schnittansicht des Werkzeugsystems von Fig. 3 mit dem an der Handwerkzeugmaschine befestigten Werkzeugvorsatz,
Fig. 5 eine Schnittansicht eines Werkzeugvorsatzes gemäß einer zweiten Ausführungsform,
Fig. 6 eine Schnittansicht eines Werkzeugsystems gemäß einer zweiten Ausführungsform mit dem an der Handwerkzeugmaschine von Fig. 1 befestigten Werkzeugvorsatz von Fig. 5,
Fig. 7 eine Schnittansicht des Werkzeugsystems von Fig. 4, gesehen in Richtung von Pfeilen VII-VII von Fig. 4,
Fig. 8 eine Schnittansicht eines Ausschnitts der Handwerkzeugmaschine von Fig. 1 mit einer Befestigungsschnittstelle gemäß einer alternativen Ausführungsform, und
Fig. 9 eine Schnittansicht eines Werkzeugsystems gemäß einer dritten Ausführungsform mit einem an der Befestigungsschnittstelle von Fig. 8 befestigten Werkzeugvorsatz.

### Beschreibung der Ausführungsbeispiele

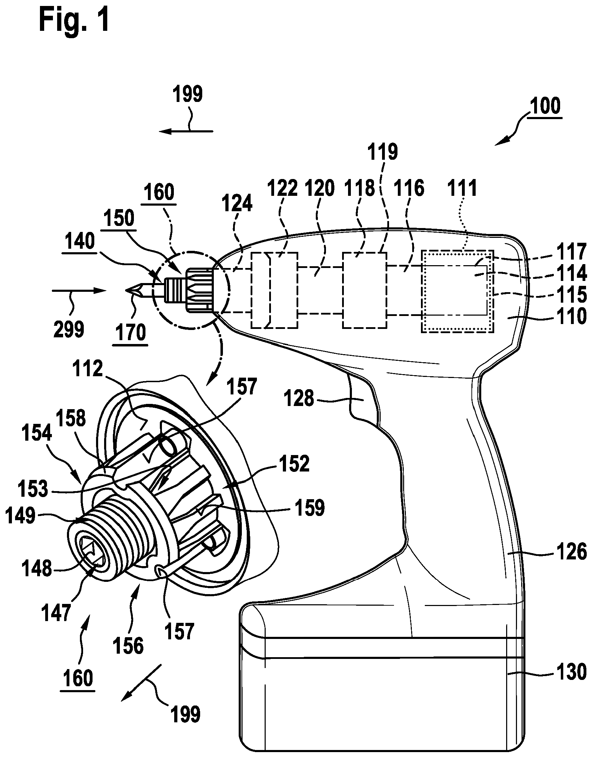

Fig. 1 zeigt eine mit einer Werkzeugaufnahme 140 versehene Handwerkzeugmaschine 100, die ein Gehäuse 110 mit einem Handgriff 126 aufweist, sowie einen vergrößerten Ausschnitt 160 der Handwerkzeugmaschine 100. Gemäß einer Ausführungsform ist die Handwerkzeugmaschine 100 zur netzunabhängigen Stromversorgung mechanisch und elektrisch mit einem Akkupack 130 verbindbar.

Die Handwerkzeugmaschine 100 ist beispielhaft als Akku-Drehschlagschrauber ausgebildet. Es wird jedoch darauf hingewiesen, dass die vorliegende Erfindung nicht auf Akku-Drehschlagschrauber beschränkt ist, sondern vielmehr bei unterschiedlichen Handwerkzeugmaschinen Anwendung finden kann, die eine der Werkzeugaufnahme 140 entsprechende Werkzeugaufnahme aufweisen, unabhängig davon, ob die Handwerkzeugmaschine elektrisch, d.h. netzunabhängig mit dem Akkupack 130 oder netzabhängig, und/oder nicht-elektrisch betreibbar ist.

In dem Gehäuse 110 sind ein von dem Akkupack 130 mit Strom versorgter, elektrischer Antriebsmotor 114, ein Getriebe 118 und ein optionales Schlagwerk 122 angeordnet. Der Antriebsmotor 114 ist z. B. über einen Handschalter 128 betätigbar, d. h. ein- und ausschaltbar, und vorzugsweise derart elektronisch steuer- bzw. regelbar, dass sowohl ein Reversierbetrieb, als auch Vorgaben hinsichtlich einer gewünschten Drehgeschwindigkeit realisierbar sind.

Gemäß einer Ausführungsform ist der Antriebsmotor 114 ein elektronisch kommutierter Antriebsmotor, vorzugsweise ein Gleichstrommotor, der illustrativ Stator- und Rotorkomponenten 111 bzw. 117 aufweist. Hierbei bilden die Statorkomponenten 111 beispielhaft einen Außenstator aus und die Rotorkomponenten 117 beispielhaft einen Innenrotor. Es wird jedoch darauf hingewiesen, dass die Beschreibung eines nach Art eines elektronisch kommutierten Antriebsmotors mit Außenstator und Innenrotor ausgebildeten Antriebsmotors lediglich beispielhaften Charakter hat und nicht als Einschränkung der Erfindung zu verstehen ist, die auch bei einem Antriebsmotor mit Innenstator und Außenrotor oder z. B. bei einem bürstenbehaften Kommutatormotor Anwendung finden kann.

Der Antriebsmotor 114 ist über eine zugeordnete Motorwelle 116 mit dem Getriebe 118 verbunden, das eine Drehung der Motorwelle 116 in eine Drehung eines zwischen Getriebe 118 und Schlagwerk 122 vorgesehenen Antriebsglieds 120, z. B. einer Antriebswelle, umwandelt. Diese Umwandlung erfolgt bevorzugt derart, dass das Antriebsglied 120 sich relativ zur Motorwelle 116 mit vergrößertem Drehmoment, aber verringerter Drehgeschwindigkeit dreht. Der Antriebsmotor 114 ist illustrativ in einem Motorgehäuse 115 angeordnet und das Getriebe 118 in einem Getriebegehäuse 119, wobei das Getriebegehäuse 119 und das Motorgehäuse 115 beispielhaft in dem Gehäuse 110 angeordnet sind.

Das mit dem Antriebsglied 120 verbundene, optionale Schlagwerk 122 ist beispielhaft ein Dreh- bzw. Rotationsschlagwerk, das schlagartige Drehimpulse mit hoher Intensität erzeugt und auf eine Abtriebswelle 124, z. B. eine Abtriebsspindel, überträgt. Ein beispielhaftes Schlagwerk, mit dem das Schlagwerk 122 realisiert werden kann, ist in der DE 20 2006 014 850 U1 beschrieben, auf die hier ausdrücklich Bezug genommen wird und deren Lehren als ein Teil der vorliegenden Beschreibung zu verstehen sind, sodass hier zwecks Knappheit der Beschreibung auf eine eingehende Beschreibung des Schlagwerks 122 verzichtet werden kann.

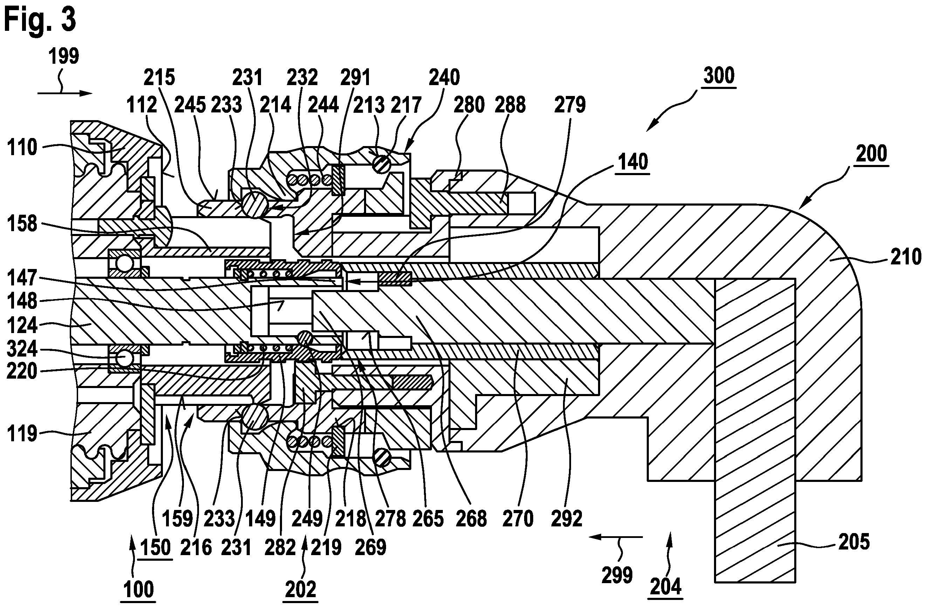

An der Abtriebswelle 124 ist die Werkzeugaufnahme 140 ausgebildet, die illustrativ einen Aufnahmekörper 147 mit Innenmehrkant-Aufnahme 148 aufweist, die zur Aufnahme von Einsatzwerkzeugen mit Außenmehrkant-Kupplungen vorgesehen ist. Am Außenumfang des z. B. drehfest und/oder einstückig mit der Abtriebswelle 124 verbundenen Aufnahmekörpers 147 ist beispielhaft eine von einem Federelement (220 in Fig. 3) in eine von der Handwerkzeugmaschine 100 wegweisende axiale Richtung 199 federbeaufschlagte Verriegelungshülse 149 zur Verriegelung geeigneter Einsatzwerkzeuge in der Innenmehrkant-Aufnahme 148 angeordnet.

Die Werkzeugaufnahme 140 ist beispielhaft nach Art eines Bithalters ausgebildet, d. h. zur Aufnahme eines nach Art eines Schrauberbits ausgebildeten Einsatzwerkzeugs 170 ausgebildet, das in Richtung der Handwerkzeugmaschine 100, wie mit einem Pfeil 299 angedeutet, in die Innenmehrkant-Aufnahme 148 eingeschoben wird. Ein derartiger Schrauberbit, der illustrativ vom sogenannten HEX-Typ ist, ist hinreichend aus dem Stand der Technik bekannt, sodass hier zwecks Knappheit der Beschreibung auf eine eingehende Beschreibung verzichtet wird. Es wird jedoch darauf hingewiesen, dass die vorliegende Erfindung nicht auf eine Verwendung von HEX-Schrauberbits beschränkt ist, sondern auch weitere Einsatzwerkzeuge in Abhängigkeit von einer jeweils gewählten Ausgestaltung der Werkzeugaufnahme 140, z. B. HEX-Bohrer oder sogenannte SDS-Quick-Einsatzwerkzeuge, Anwendung finden können. Darüber hinaus wird darauf hingewiesen, dass auch der Aufbau und die Funktionsweise eines geeigneten Bithalters dem Fachmann hinreichend bekannt sind, sodass hier zwecks Knappheit der Beschreibung auf eine eingehende Beschreibung des Bithalters 140 verzichtet werden kann.

Gemäß einer Ausführungsform ist der Handwerkzeugmaschine 100 eine Befestigungsschnittstelle 150 zugeordnet, die illustrativ im Bereich des Bithalters 140 am Getriebegehäuse 119 oder unmittelbar am Gehäuse 110 axial und radial unbeweglich befestigt ist. Es wird jedoch darauf hingewiesen, dass die Befestigungsschnittstelle 150 lediglich beispielhaft als ein separates Bauteil ausgebildet ist und alternativ hierzu auch einstückig mit dem Getriebegehäuse 119 oder dem Gehäuse 110 ausgebildet sein kann.

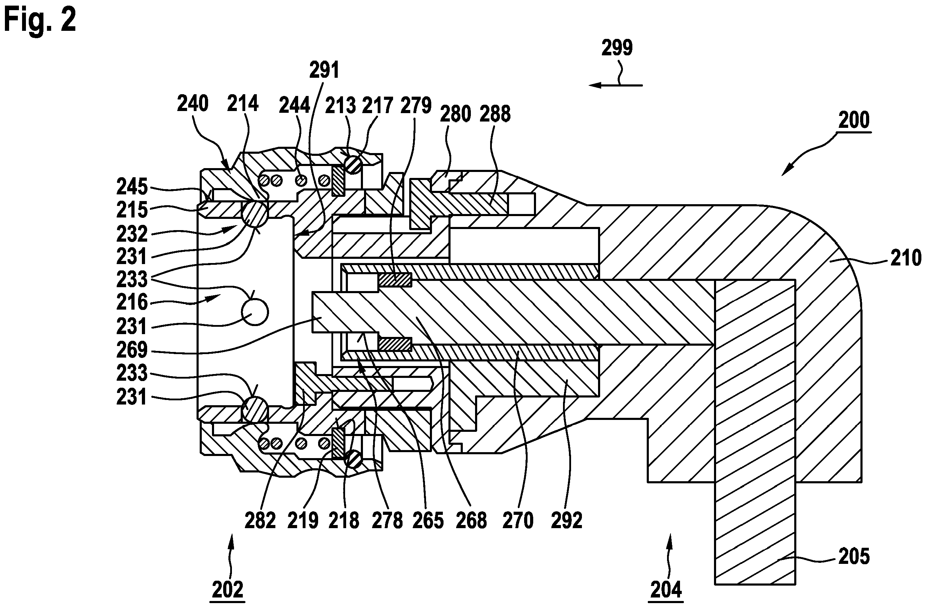

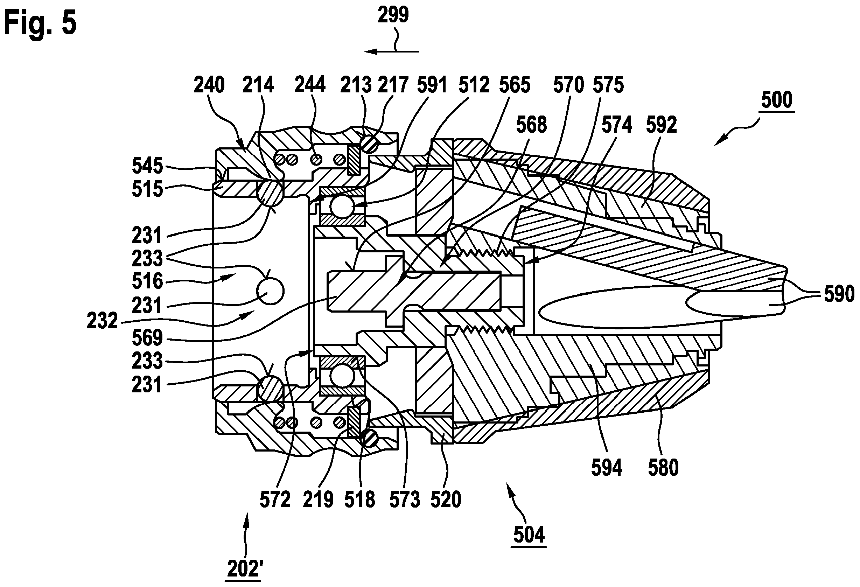

Die Befestigungsschnittstelle 150 dient zur Befestigung, insbesondere einer in einer vorgegebenen Winkelposition ausgerichteten Befestigung, eines zugeordneten Werkzeugvorsatzes (200 in Fig. 2 oder 500 in Fig. 5) und weist illustrativ ein an einer Stirnseite 112 des Gehäuses 110 am Getriebegehäuse 119 oder dem Gehäuse 110 verdrehgesichert befestigtes, zumindest abschnittsweise hülsenförmiges Trägerelement 158 mit einem Außenumfang 159 auf. Dieses nachfolgend auch als "Befestigungshülse" bezeichnete Trägerelement 158 ummantelt beispielhaft zumindest abschnittsweise den Bithalter 140 mit einer vorgegebenen radialen Beabstandung, um eine axiale Verschiebung der Verriegelungshülse 149 des Bithalters 140 im Inneren der Befestigungshülse 158 zu ermöglichen.

Am Außenumfang 159 der Befestigungshülse 158 ist illustrativ eine Mehrzahl von nutartigen Aufnahmen 152, 154, 156, 157 zur Aufnahme mindestens eines und bevorzugt einer Mehrzahl von Verriegelungselementen (232 in Fig. 2 oder 5) ausgebildet, wobei die nutartigen Aufnahmen 152, 154, 156, 157 in Längsrichtung der Befestigungsschnittstelle 150, d. h. in der Richtung 199 bzw. 299, ausgerichtet sind. Hierbei sind die nutartigen Aufnahmen 157 z. B. derartig ausgebildet, dass diese beispielsweise Befestigungselemente wie Nieten oder Schrauben zur Befestigung der Befestigungshülse 158 an der Stirnseite 112 des Gehäuses 110 aufnehmen können. Beispielhaft sind jeweils drei nutartige Aufnahmen 152, drei nutartige Aufnahmen 154 und drei nutartige Aufnahmen 156 vorgesehen, die jeweils durch eine nutartige Aufnahme 157 voneinander beabstandet sind, sodass somit auch drei nutartige Aufnahmen 157 vorgesehen sind. Es wird jedoch darauf hingewiesen, dass die insgesamt zwölf nutartigen Aufnahmen 152, 154, 156, 157 lediglich beispielhaften Charakter haben und nicht als Einschränkung der Erfindung zu verstehen sind.

Gemäß einer Ausführungsform verjüngen sich zumindest die nutartigen Aufnahmen 152, 154, 156 in die von der Handwerkzeugmaschine 100 wegweisende axiale Richtung 199, um eine verdrehgesicherte axiale Zentrierung eines zugeordneten Werkzeugvorsatzes (200 in Fig. 2 oder 500 in Fig. 5) an dem Gehäuse 110 und/oder dem Getriebegehäuse 119 zu ermöglichen, wie untenstehend bei Fig. 3 bis 5 beschrieben. Illustrativ weisen die nutartigen Aufnahmen 152, 154, 156 jeweils einen zumindest annähernd V-förmigen Endbereich 153 auf.

Fig. 2 zeigt einen beispielhaften Werkzeugvorsatz 200, der gemäß einer Ausführungsform zur Befestigung an der Befestigungsschnittstelle 150 der Handwerkzeugmaschine 100 von Fig. 1 ausgebildet ist. Der Werkzeugvorsatz 200 ist gemäß einer ersten Ausführungsform nach Art eines Winkelvorsatzes ausgebildet und weist beispielhaft einen Verriegelungsabschnitt 202 sowie eine nachfolgend auch als "Winkelantriebsabschnitt" bezeichnete Antriebseinheit 204 auf. Es wird jedoch darauf hingewiesen, dass der Werkzeugvorsatz 200 nur beispielhaft als Winkelvorsatz ausgebildet ist und nicht zur Einschränkung der Erfindung. Vielmehr kann der Werkzeugvorsatz 200 eine beliebige Ausgestaltung haben, z. B. nach Art eines Bohrfutteradapters, wie beispielhaft in Fig. 5 beschrieben, oder eines Exzentervorsatzes usw. Zur Vereinfachung der Beschreibung wird der Werkzeugvorsatz 200 deshalb nachfolgend auch als der "Winkelvorsatz 200" bezeichnet.

Der Winkelantriebsabschnitt 204 weist beispielhaft ein Vorsatzgehäuse 210 auf, in dem eine drehend antreibbare Antriebswelle 268 des Winkelvorsatzes 200 drehbeweglich gelagert ist. Die Antriebswelle 268 dient zum Antrieb einer in einem vorgegebenen Winkel, illustrativ 90°, hierzu angeordneten Abtriebswelle 205, die ebenfalls drehbeweglich im Vorsatzgehäuse 210 gelagert ist und z. B. zur Aufnahme des Schrauberbits 170 von Fig. 1 ausgebildet sein kann. Es wird jedoch darauf hingewiesen, dass eine geeignete Realisierung des Winkelantriebsabschnitts 204 hinreichend aus dem Stand der Technik bekannt ist, sodass hier auf eine eingehende Beschreibung des Winkelantriebabschnitts 204 zwecks Knappheit der Beschreibung verzichtet werden kann.

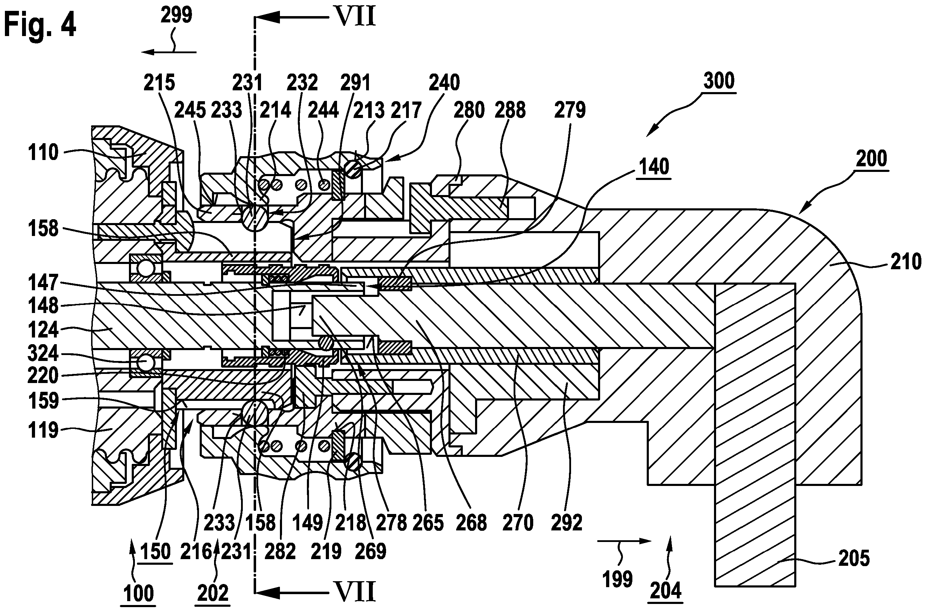

Im Bereich eines vom Winkelantriebsabschnitt 204 abgewandten, freien Endes 269 der Antriebswelle 268, an dem beispielhaft eine Mehrkant-Mitnahmekontur 265 ausgebildet ist, ist ein zumindest bereichsweise hülsenförmiges Verschluss- und Führungsglied 280 angeordnet, durch das die Antriebswelle 268 durchgreift. Dieses Verschluss- und Führungsglied 280 ist über geeignete Befestigungsglieder 288, z. B. Schrauben oder Nieten, am Vorsatzgehäuse 210 befestigt. Darüber hinaus ist der Antriebswelle 268 ein mit einem freien Ende 278 versehenes Betätigungsglied 270 zugeordnet, das die Antriebswelle 268 zumindest abschnittsweise hülsenförmig umgreift und dessen Funktionalität unten stehend bei Fig. 3 und 4 eingehend beschrieben wird. Das Betätigungsglied 270 ist beispielhaft in einer im Vorsatzgehäuse 210 vorgesehenen Lagerhülse 292 gelagert und über einen Sicherungsring 279 gegen ein Ausrutschen über das freie Ende 269 der Antriebswelle 268 gesichert. Alternativ hierzu können die Antriebswelle 268 und das Betätigungsglied 270 oder das Vorsatzgehäuse 210 und das Betätigungsglied 270 auch einstückig ausgebildet sein.

Gemäß einer Ausführungsform ist die Antriebswelle 268 relativ zum Betätigungsglied 270 verdrehbar. In diesem Fall kann der Sicherungsring 279 nach Art eines in das Betätigungsglied 270 eingepressten Gleitlagers, z. B. eines Sinterlagers ausgebildet sein.

Der Verriegelungsabschnitt 202 hat illustrativ einen Grundkörper 215, der über zugeordnete Befestigungsglieder 282, z. B. Nieten oder Schrauben, an dem Verschluss- und Führungsglied 280 befestigt ist. Der Grundkörper 215 bildet illustrativ einen mit einer inneren Ringschulter 291 versehenen, inneren Hohlraum 216 aus, in den die Antriebswelle 268 eingreift, und weist einen Außenumfang 245 auf, an dem eine gegen eine Federkraft eines Federelements 244 axial verschiebbare Verriegelungshülse 240 angeordnet ist. Diese Verriegelungshülse 240 ist von dem Federelement 244 in eine von dem Winkelvorsatz 200 wegweisende axiale Richtung vorgespannt, die bei einer Befestigung des Winkelvorsatzes 200 an der Handwerkzeugmaschine 100 von Fig. 1 in Richtung der Handwerkzeugmaschine 100 weist und somit der Richtung 299 von Fig. 1 entspricht. Hierzu ist das Federelement 244 zwischen einem beispielhaft von der Verriegelungshülse 240 ausgebildeten Klemmring 214, der auch als separates Bauteil ausgeführt sein kann, und einer am Grundkörper 215 in einer Ringnut 218 angeordneten Sicherungsscheibe 219 angeordnet. Darüber hinaus ist in einer inneren Ringnut 213 der Verriegelungshülse 240 illustrativ ein an der Sicherungsscheibe 219 in der Richtung 299 blockierter O-Ring 217 angeordnet, um ein Abrutschen der Verriegelungshülse 240 vom Grundkörper 215 aufgrund einer vom Federelement 244 aufgebrachten Federkraft zu verhindern.

Es wird jedoch darauf hingewiesen, dass die Beschreibung der federbeaufschlagten Verriegelungshülse 240 lediglich beispielhaften Charakter hat und nicht als Einschränkung der Erfindung zu verstehen ist. Alternativ hierzu kann die Verriegelungshülse 240 z. B. auch verdrehbar ausgebildet sein, sodass auf eine Federbeaufschlagung verzichtet werden kann.

Gemäß einer Ausführungsform ist der Verriegelungsabschnitt 202 über mindestens ein und bevorzugt eine Mehrzahl von Verriegelungselementen 232 an der Befestigungsschnittstelle 150 der Handwerkzeugmaschine 100 von Fig. 1 verriegelbar, wobei die Mehrzahl von Verriegelungselementen 232 an der Befestigungsschnittstelle 150 von Fig. 1 von der Verriegelungshülse 240 in einer zugeordneten Verriegelungsstellung blockierbar sind. Diese Verriegelungselemente 232 sind gemäß einer Ausführungsform dazu ausgebildet, durch ein Zusammenwirken mit der Befestigungsschnittstelle 150 von Fig. 1 in Längsrichtung der Befestigungsschnittstelle 150 zumindest eine verdrehgesicherte axiale Zentrierung sowie eine zumindest im Wesentlichen tangential und radial spielfreie Fixierung des Winkelvorsatzes 200 an dem Gehäuse 110 der Handwerkzeugmaschine 100 von Fig. 1 zu ermöglichen. Bevorzugt weist die Mehrzahl von Verriegelungselementen 232 mindestens eine zumindest abschnittsweise in eine zugeordnete, radiale Öffnung 233 des Grundkörpers 215 eingreifende Verriegelungskugel 231 auf.

Fig. 3 zeigt eine erste Ausführungsform eines Werkzeugsystems 300, das beispielhaft die Handwerkzeugmaschine 100 von Fig. 1 und den Winkelvorsatz 200 von Fig. 2 aufweist, zur Illustration einer beispielhaften Montage des Winkelvorsatzes 200 an der Handwerkzeugmaschine 100. Diese ist hier nur abschnittsweise anhand eines Ausschnitts des Gehäuses 110 von Fig. 1 gezeigt, an dessen Stirnseite 112 die Befestigungsschnittstelle 150 von Fig. 1 angeordnet ist. Diese ist bevorzugt am Getriebegehäuse 119 befestigt, in dem die Abtriebswelle 124 in einem illustrativen Wälzlager 324 drehbeweglich gelagert ist, wobei an der Abtriebswelle 124 die Werkzeugaufnahme 140 von Fig. 1 angeordnet ist.

Zur Montage des Winkelvorsatzes 200 an der Befestigungsschnittstelle 150 der Handwerkzeugmaschine 100 wird in einem ersten Schritt die Verriegelungshülse 240 des Winkelvorsatzes 200 von ihrer Verriegelungsposition gegen die Federkraft des Federelements 244 in die Richtung 199 in ihre Entriegelungsposition verschoben, sodass die Verriegelungskugeln 231 des Winkelvorsatzes 200 freigegeben werden. Dann wird der Winkelvorsatz 200 in einem weiteren Schritt derart an der Befestigungsschnittstelle 150 positioniert, dass der Grundkörper 215 auf dem Außenumfang 159 der Befestigungshülse 158 aufliegt und das freie Ende 269 der Antriebswelle 268 des Winkelvorsatzes 200 in die Innenmehrkant-Aufnahme 148 der Werkzeugaufnahme 140 eingreift, während dessen Betätigungsglied 270 mit seinem freien Ende 278 zur Anlage gegen die Verriegelungshülse 149 der Werkzeugaufnahme 140 gebracht wird, die beispielhaft zugeordnete Verriegelungskugeln 249 radial einwärts beaufschlagt, wobei die Verriegelungskugeln 249 ein ungehindertes Einschieben der Antriebswelle 268 in die Innenmehrkant-Aufnahme 148 verhindern. Hierbei wird die Verriegelungshülse 149 von einem Federelement 220 in die von der Handwerkzeugmaschine 100 wegweisende axiale Richtung 199 federbeaufschlagt, sodass die Federkräfte der Federelemente 244, 220 bei der Montage des Winkelvorsatzes 200 an der Handwerkzeugmaschine 100 in einander entgegengesetzte Richtungen wirken.

In einem weiteren Schritt wird nun der Winkelvorsatz 200 in Richtung der Handwerkzeugmaschine 100, d. h. in die Richtung 299, auf die Befestigungsschnittstelle 150 aufgeschoben, z. B. bis die innere Ringschulter 291 des Grundkörpers 215 gegen die Befestigungshülse 158 zum Anliegen kommt. Hierbei wird die Verriegelungshülse 149 der Werkzeugaufnahme 140 von dem Betätigungsglied 270 des Winkelvorsatzes 200 gegen eine von dem Federelement 220 aufgebrachte Federkraft in die Richtung 299 verschoben, sodass die Verriegelungskugeln 231 des Winkelvorsatzes 200 in die zur Aufnahme der Verriegelungskugeln 231 vorgesehenen, nutartigen Aufnahmen (152, 154, 156, 157 in Fig. 2) der Befestigungshülse 158 eingreifen können und das freie Ende 269 der Antriebswelle 268 in die Innenmehrkant-Aufnahme 148 eingeschoben wird. Hierdurch wird eine einhändige Montage des Werkzeugvorsatzes 200 an der Handwerkzeugmaschine 100 ermöglicht, wobei die Antriebswelle 268 tangential und axial spielbehaftet und bevorzugt ausschließlich zur Drehmomentübertragung in der Innenmehrkant-Aufnahme 148 des Aufnahmekörpers 147 der Werkzeugaufnahme 140 aufgenommen wird.

Anschließend wird die Verriegelungshülse 240 des Winkelvorsatzes 200 und somit der gesamte Winkelvorsatz 200 freigegeben, woraufhin die Verriegelungshülse 240 durch die Federkraft des Federelements 244 in die Richtung 199 in ihre Verriegelungsstellung zurück verschoben wird, in der die Verriegelungshülse 240 die nach radial auswärts gerichtete Bewegung der Verriegelungskugeln 231 blockiert bzw. verhindert. Gleichzeitig wird das Betätigungsglied 270 aufgrund der Federkraft des Federelements 220 von der Verriegelungshülse 149 der Werkzeugaufnahme 140 in die Richtung 199 beaufschlagt, sodass eine axiale Verschiebung des gesamten Winkelvorsatzes 200 in die Richtung 199 erzwungen wird. Somit ist das Betätigungsglied 270 gemäß einer Ausführungsform dazu ausgebildet, eine Federbeaufschlagung des Winkelvorsatzes 200 durch das Federelement 220 über die erste Verriegelungshülse 149 im montierten Zustand des Winkelvorsatzes 200 an der Handwerkzeugmaschine 100 in der Richtung 199 zu ermöglichen.

Durch die axiale Verschiebung des gesamten Winkelvorsatzes 200 in die Richtung 199 werden die Verriegelungskugeln 231 des Winkelvorsatzes 200 in die V-förmigen Endbereiche 153 der nutartigen Aufnahmen (152, 154, 156, 157 in Fig. 2) der Befestigungshülse 158 eingepresst, sodass durch ein Zusammenwirken der Befestigungshülse 158 bzw. der Befestigungsschnittstelle 150 mit den Verriegelungskugeln 231 bzw. den Verriegelungselementen 232 in Längsrichtung der Befestigungsschnittstelle 150 zumindest eine verdrehgesicherte axiale Zentrierung sowie eine zumindest im Wesentlichen tangential und radial spielfreie Fixierung des Winkelvorsatzes 200 an dem Gehäuse 110 und/oder dem Getriebegehäuse 119 der Handwerkzeugmaschine 100 ermöglicht wird.

Fig. 4 zeigt das Werkzeugsystem 300 von Fig. 3 mit der Handwerkzeugmaschine 100 von Fig. 1 und dem Winkelvorsatz 200 von Fig. 2 im montierten Zustand. Fig. 4 verdeutlicht die Federbeaufschlagung des Betätigungsglieds 270 des Winkelvorsatzes 200 durch die Verriegelungshülse 149 der Werkzeugaufnahme 140 der Handwerkzeugmaschine 100.

Fig. 5 zeigt einen ebenfalls zur Befestigung an der Befestigungsschnittstelle 150 der Handwerkzeugmaschine 100 von Fig. 1 vorgesehenen Werkzeugvorsatz 500, der gemäß einer zweiten Ausführungsform nach Art eines Bohrfutteradapters ausgebildet ist und beispielhaft einen Verriegelungsabschnitt 202' sowie einen Spannfutterabschnitt 504 aufweist. Zur Vereinfachung der Beschreibung wird der Werkzeugvorsatz 500 deshalb nachfolgend auch als der "Bohrfuttervorsatz 500" bezeichnet.

Der Spannfutterabschnitt 504 weist beispielhaft einen Tragkörper 594 auf, an dem eine Mehrzahl von Spannbacken 590 gelagert ist, die über einen mit einer Spannhülse 580 versehenen Spannkörper 592 zum Einspannen eines zugeordneten Einsatzwerkzeugs, z. B. eines Rundbohrers, betätigbar ist. Der Tragkörper 594 ist z. B. über eine Schraubverbindung 575 verdrehgesichert an einem ersten axialen Endbereich 574 eines dem Verriegelungsabschnitt 202' zugeordneten Betätigungsglieds 570 befestigt, sodass sich der Tragkörper 594 bei einer Drehbewegung des Betätigungsglieds 570 mit diesem mit dreht. Alternativ hierzu kann der Tragkörper 594 z. B. auch über eine Pressverbindung mit dem Betätigungsglied 570 verbunden sein oder auch einstückig mit diesem ausgebildet sein. Illustrativ ist in dem zumindest abschnittsweise hülsenförmig ausgebildeten Betätigungsglied 570 eine Antriebswelle 568 verdrehgesichert aufgenommen, sodass sich das Betätigungsglied 570 bei einer Drehbewegung der Antriebswelle 568 mit dieser mit dreht. Alternativ hierzu können die Antriebswelle 568 und das Betätigungsglied 570 auch einstückig ausgebildet sein.

An einem freien axialen Ende 569 der Antriebswelle 568, das exemplarisch in einem zweiten axialen Endbereich 572 des Betätigungsglieds 570 aufgenommen ist, ist eine Mehrkant-Mitnahmekontur 565 ausgebildet. Ein Außenumfang 573 des zweiten axialen Endbereichs 572 des Betätigungsglieds 570 ist drehbeweglich in einem dem Verriegelungsabschnitt 202' zugeordneten Lagerelement 512, z. B. einem nach Art eines Radiallagers ausgebildeten Wälzlager, gelagert bzw. bevorzugt in dieses eingepresst. Es wird jedoch darauf hingewiesen, dass eine geeignete Realisierung des Spannfutterabschnitts 504 hinreichend aus dem Stand der Technik bekannt ist, sodass hier auf eine eingehende Beschreibung des Spannfutterabschnitts 504 zwecks Knappheit der Beschreibung verzichtet werden kann.

Der Verriegelungsabschnitt 202' hat beispielhaft einen Grundkörper 515, der illustrativ einen mit einer inneren Ringschulter 591 versehenen, inneren Hohlraum 516 ausbildet, in den die Antriebswelle 568 eingreift, wobei im Bereich der Ringschulter 591 beispielhaft das Lagerelement 512 angeordnet und bevorzugt eingepresst ist oder z. B. durch Sicherungs- bzw. Sprengringe dort gehalten wird. Im Bereich zwischen dem Grundkörper 515 und dem Tragkörper 594 des Spannfutterabschnitts 504 ist beispielhaft eine Abdeckhülse 520 angeordnet.

Der Grundkörper 515 weist beispielhaft einen Außenumfang 545 auf, an dem illustrativ die gegen die Federkraft des Federelements 244 axial verschiebbare Verriegelungshülse 240 von Fig. 2 angeordnet ist. Diese Verriegelungshülse 240 ist von dem Federelement 244 in eine von dem Bohrfuttervorsatz 500 wegweisende axiale Richtung, d. h. die Richtung 299 von Fig. 1, vorgespannt. Hierzu ist das Federelement 244 zwischen dem beispielhaft von der Verriegelungshülse 240 ausgebildeten Klemmring 214 von Fig. 2 und der am Grundkörper 515 in einer Ringnut 518 angeordneten Sicherungsscheibe 219 angeordnet.

Der weitere Aufbau des Verriegelungsabschnitts 202' entspricht dem Aufbau des Verriegelungsabschnitts 202 von Fig. 2, sodass hier zwecks Knappheit der Beschreibung auf eine eingehende Beschreibung dieses weiteren Aufbaus verzichtet werden kann. Darüber hinaus wird darauf hingewiesen, dass die Funktionsweise des Verriegelungsabschnitts 202' der Funktionsweise des Verriegelungsabschnitts 202 von Fig. 2 entspricht, sodass hier auch auf eine eingehende Beschreibung dieser Funktionsweise zwecks Knappheit der Beschreibung verzichtet werden kann.

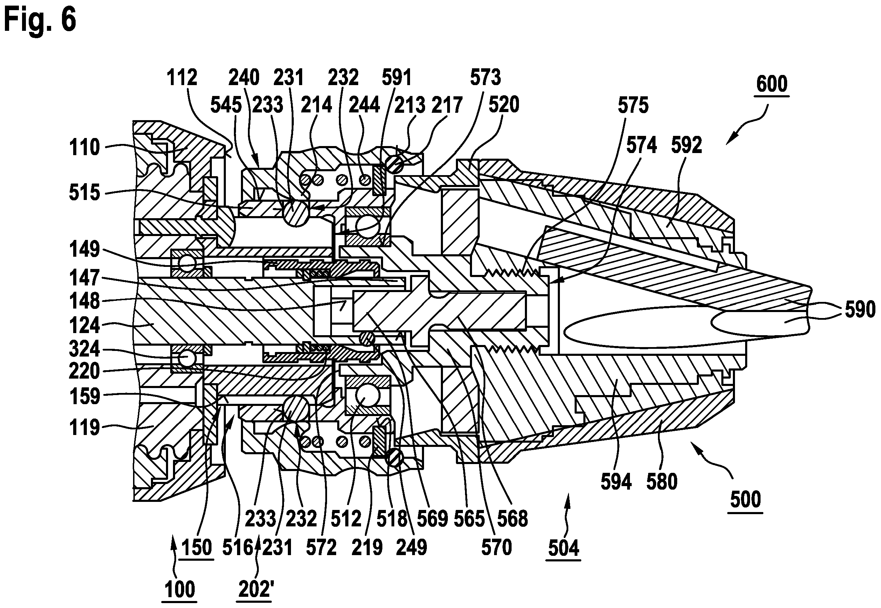

Fig. 6 zeigt eine zweite Ausführungsform eines Werkzeugsystems 600, das beispielhaft die anhand des Ausschnitts von Fig. 3 und 4 illustrierte Handwerkzeugmaschine 100 von Fig. 1 und den Bohrfuttervorsatz 500 von Fig. 5 aufweist. Das Werkzeugsystem 600 ist hierbei im montierten Zustand gezeigt. Die Montage des Bohrfuttervorsatzes 500 an der Handwerkzeugmaschine 100 erfolgt analog zu der oben bei Fig. 3 am Beispiel des Werkzeugsystems 300 beschriebenen Montage, sodass hier zwecks Knappheit der Beschreibung auf eine eingehende Beschreibung der Montage verzichtet wird.

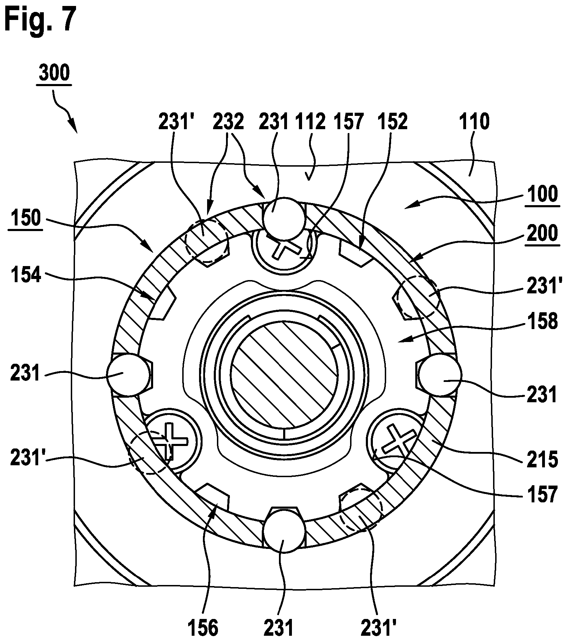

Fig. 7 zeigt das Werkzeugsystem 300 von Fig. 4 mit der Handwerkzeugmaschine 100 von Fig. 1 und dem an deren Gehäuse 110 befestigten Winkelvorsatz 200 von Fig. 2 im montierten Zustand, wobei jeweils eine der Verriegelungskugeln 231 in jeweils eine der nutartigen Aufnahmen 152, 154, 156, 157 der Befestigungsschnittstelle 150 eingreift. Hierbei ist der Winkelvorsatz 200 beispielhaft in einer vorgegebenen Winkelposition ausgerichtet, in der die Abtriebswelle 205 von Fig. 3 des Winkelvorsatzes 200 z. B. parallel zur Längsrichtung des Handgriffs 126 von Fig. 1 der Handwerkzeugmaschine 100 ausgerichtet ist.

Eine Änderung der vorgegebenen Winkelposition kann gemäß einer Ausführungsform wie nachfolgend beschrieben ohne ein Abziehen des Winkelvorsatzes 200 von der Befestigungsschnittstelle 150 bewirkt werden. Hierzu wird die Verriegelungshülse 240 in Fig. 4 in Richtung des Pfeils 199 in die bei Fig. 3 beschriebene Entriegelungsposition verschoben, allerdings ohne eine axiale Verschiebung des Winkelvorsatzes 200. Durch diese Verschiebung der Verriegelungshülse 240 in die Entriegelungsposition werden die Verriegelungskugeln 231 freigegeben und können bei einer Verdrehung des Winkelvorsatzes 200 aus den jeweiligen nutartigen Aufnahmen 152, 154, 156, 157 ausrutschen und in andere nutartige Aufnahmen 152, 154, 156, 157 überführt werden. Werden hierbei die Verriegelungskugeln 231 in die mit 231' gekennzeichneten Positionen überführt, z. B. durch eine Verdrehung des Werkzeugvorsatzes 200 in Fig. 7 im Uhrzeigersinn, entspricht dies einer Verdrehung des Winkelvorsatzes 200 um etwa 60°. Anschließend kann der Winkelvorsatz 200 durch eine erneute Freigabe der Verriegelungshülse 240 von Fig. 4 wie bei Fig. 3 beschrieben in seiner neuen Winkelposition verriegelt werden.

Es wird jedoch darauf hingewiesen, dass die Änderung der vorgegebenen Winkelposition lediglich beispielhaft unter Bezugnahme auf das Werkzeugsystem 300 von Fig. 3 beschrieben wurde. Bei dem Werkzeugsystem 600 von Fig. 6 könnte eine Winkelpositionsänderung auf analoge Art und Weise erfolgen. Jedoch ist die Winkelposition des Bohrfuttervorsatzes 500 aufgrund seiner Achssymmetrie irrelevant im Betrieb des Werkzeugsystems 600 von Fig. 6. Allerdings ergibt sich somit eine Vielzahl von Winkelpositionen, in denen der Bohrfuttervorsatz 500 im Werkzeugsystem 600 von Fig. 6 bei einer entsprechenden Montage mit der Handwerkzeugmaschine 100 von Fig. 1 verbindbar ist, sodass eine schnelle und einfache Montage unabhängig von einer jeweiligen Winkelposition möglich ist.

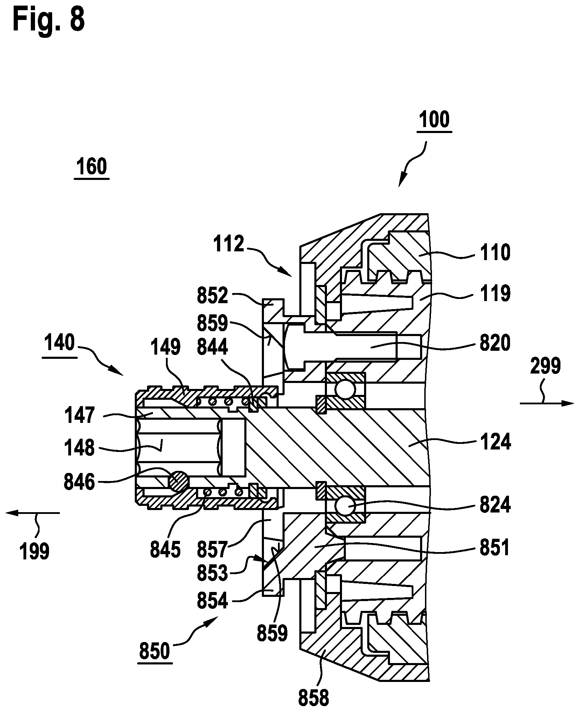

Fig. 8 zeigt den Ausschnitt 160 der Handwerkzeugmaschine 100 von Fig. 1 in Schnittansicht, mit dem Bithalter 140 sowie einer nachfolgend ebenfalls als "Maschinenschnittstelle" bezeichneten Befestigungsschnittstelle 850 gemäß einer alternativen Ausführungsform. Der Bithalter 140 ist wie bei Fig. 1 beschrieben im Bereich der Stirnseite 112 des Gehäuses 110 an der Abtriebswelle 124 von Fig. 1 ausgebildet, die z.B. in einem im Gehäuse 110, bevorzugt im Getriebegehäuse 119, der Handwerkzeugmaschine 100 angeordneten Lagerelement 824, beispielsweise einem Wälzlager, drehbeweglich gelagert ist.

Der Bithalter 140 weist den Aufnahmekörper 147 mit der Innenmehrkant-Aufnahme 148 und der Verriegelungshülse 149 von Fig. 1 auf. Die Verriegelungshülse 149 dient beispielhaft zur radialen Beaufschlagung von mindestens einem Verriegelungselement 846, z.B. einer Verriegelungskugel, und wird von einem zugeordneten Federelement 845, das sich gegen einen an der Abtriebswelle 124 gehaltenen Sicherungsring 844 abstützt, in die von der Handwerkzeugmaschine 100 wegweisende axiale Richtung 199 von Fig. 1 federbeaufschlagt. Zur Entriegelung der Werkzeugaufnahme 140 muss die Verriegelungshülse 149 gegen eine vom Federelement 845 aufgebrachte Federkraft in Richtung der Stirnseite 112 verschoben werden, sodass eine radial auswärts gerichtete Bewegung der mindestens einen Verriegelungskugel 846 ermöglicht wird.

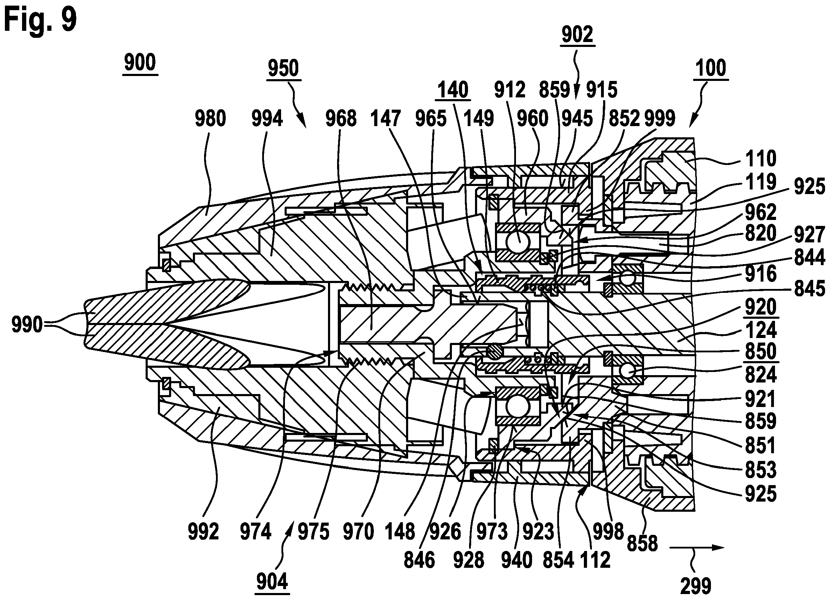

Die Maschinenschnittstelle 850 ist illustrativ im Bereich des Bithalters 140 am Getriebegehäuse 119 oder unmittelbar am Gehäuse 110 axial und radial unbeweglich befestigt und beispielhaft als ein separates Bauteil ausgebildet, kann alternativ hierzu jedoch auch einstückig mit dem Getriebegehäuse 119 oder dem Gehäuse 110 ausgebildet sein kann. Bevorzugt dient die Maschinenschnittstelle 850 zur verdrehgesicherten Befestigung eines zugeordneten Werkzeugvorsatzes (950 in Fig. 9), z.B. eines Bohrfuttervorsatzes, eines Winkelvorsatzes oder eines Exzentervorsatzes usw., und weist illustrativ ein an der Stirnseite 112 des Gehäuses 110 am Getriebegehäuse 119 oder dem Gehäuse 110 mit beispielhaft nach Art von Schrauben ausgebildeten Befestigungsgliedern 820 verdrehgesichert befestigtes Befestigungselement 851 auf. Dieses ist beispielhaft zumindest abschnittsweise hülsen- bzw. ringförmig ausgebildet und im Bereich einer an der Stirnseite 112 am Gehäuse 110 ringförmig angeordneten Abschluss- bzw. Schutzhülse 858 mit geeigneten Befestigungsgliedern, z.B. Schrauben oder Nieten, befestigt, kann alternativ hierzu aber auch einstückig mit dem Getriebegehäuse 119 oder dem Gehäuse 110 ausgebildet sein. Das Befestigungselement 851 ummantelt den Bithalter 140 bevorzugt zumindest abschnittsweise mit einer vorgegebenen radialen Beabstandung, um eine axiale Verschiebung der Verriegelungshülse 149 des Bithalters 140 im Inneren des Befestigungselements 851 zu ermöglichen.

Illustrativ weist das Befestigungselement 851 an seinem Außenumfang mindestens ein und illustrativ zwei Halteglieder 852, 854 auf, die nach Art von Bajonetten zur Ausbildung einer Bajonett-Verbindung ausgebildet sind. Es wird jedoch hingewiesen, dass die Beschreibung einer derartigen Bajonett-Verbindung lediglich beispielhaften Charakter hat und nicht als Einschränkung der Erfindung dient. Vielmehr können auch alternative Befestigungsmöglichkeiten bei der Maschinenschnittstelle 850 Anwendung finden, wie z.B. eine sogenannte Drahtbügelverriegelung oder eine Kugelverriegelung usw.

Gemäß einer Ausführungsform ist an der Maschinenschnittstelle 850 eine zumindest abschnittsweise konusförmige Zentrierhilfe 853 zur axialen Zentrierung eines Verriegelungsabschnitts (902 in Fig. 9) eines zugeordneten Werkzeugvorsatzes (950 in Fig. 9) vorgesehen. Illustrativ ist das Befestigungselement 851 dazu ausgebildet, die axiale Zentrierung des zugeordneten Werkzeugvorsatzes (950 in Fig. 9) an dem Getriebegehäuse 119 und/oder dem Gehäuse 110 zu ermöglichen, wie untenstehend bei Fig. 9 beschrieben. Hierzu ist am Innenumfang des Befestigungselements 851 eine beispielhaft ringförmige, zumindest abschnittsweise trichterförmige Zentrierfläche 859 zur Ausbildung der Zentrierhilfe 853 vorgesehen.

Es wird jedoch darauf hingewiesen, dass die Zentrierfläche 859 nur beispielhaft trichterförmig ausgebildet ist und nicht als Einschränkung der Erfindung. Vielmehr ist auch eine kegelförmige Ausgestaltung an einem zusätzlichen Zentrierring realisierbar. Dementsprechend repräsentiert eine Bezugnahme auf den Term "konusförmig" im Kontext der vorliegenden Erfindung sowohl eine Bezugnahme auf eine kegelförmige, als auch auf eine trichterförmige Ausgestaltung eines entsprechenden Bauteils. Darüber hinaus kann die Zentrierhilfe 853 anstelle einer einzelnen ring- und trichterförmigen Zentrierfläche 859 mehrere konusförmige Bogenabschnitte aufweisen, usw.

Des Weiteren weist das Befestigungselement 851 mindestens ein und beispielhaft drei optionale Winkeleinstellglieder 857 auf. Diese dienen z.B. bei einer Befestigung des Werkzeugvorsatzes (950 in Fig. 9) an der Maschinenschnittstelle 850 zur Vorgabe einer vorgegebenen Winkelposition.

Fig. 9 zeigt ein beispielhaftes Werkzeugsystem 900, das illustrativ die Handwerkzeugmaschine 100 von Fig. 1 und einen beispielhaften Werkzeugvorsatz 950 aufweist. Hierbei ist die Handwerkzeugmaschine 100 nur abschnittsweise anhand des Ausschnitts des Getriebegehäuses 119 bzw. des Gehäuses 110 von Fig. 8 gezeigt, an dessen Stirnseite 112 die Maschinenschnittstelle 850 von Fig. 8 angeordnet ist, und in dem die Abtriebswelle 124 in dem illustrativen Wälzlager 824 von Fig. 8 drehbeweglich gelagert ist, wobei an der Abtriebswelle 124 die Werkzeugaufnahme 140 von Fig. 8 angeordnet ist.

Gemäß einer Ausführungsform ist der Werkzeugvorsatz 950 zur verdrehgesicherten Befestigung an der Maschinenschnittstelle 850 der Handwerkzeugmaschine 100 ausgebildet. Bevorzugt ist der Werkzeugvorsatz 950 nach Art eines Bohrfuttervorsatzes ausgebildet und wird deshalb nachfolgend auch als der "Bohrfuttervorsatz 950" bezeichnet. Es wird jedoch darauf hingewiesen, dass der Werkzeugvorsatz 950 nur beispielhaft als Bohrfuttervorsatz ausgebildet ist und nicht zur Einschränkung der Erfindung. Vielmehr kann der Werkzeugvorsatz 950 eine beliebige Ausgestaltung haben, z.B. nach Art eines Winkelvorsatzes, eines Exzentervorsatzes usw., die wie oben beschrieben ebenfalls verdrehgesichert an der Maschinenschnittstelle 850 der Handwerkzeugmaschine 100 befestigt werden können.

Der Bohrfuttervorsatz 950 weist beispielhaft einen Verriegelungsabschnitt 902 sowie eine Spannfuttereinheit 904 auf. Die Spannfuttereinheit 904 weist beispielhaft einen Tragkörper 994 auf, an dem eine Mehrzahl von Spannbacken 990 gelagert ist, die über einen mit einer Spannhülse 980 versehenen Spannkörper 992 zum Einspannen eines zugeordneten Einsatzwerkzeugs, z.B. eines Rundbohrers, betätigbar ist. Der Tragkörper 994 ist z.B. über eine Schraubverbindung 975 verdrehgesichert an einem ersten axialen Endbereich 974 eines dem Verriegelungsabschnitt 902 zugeordneten Betätigungsglieds 970 befestigt, sodass sich der Tragkörper 994 bei einer Drehbewegung des Betätigungsglieds 970 mit diesem mit dreht. Alternativ hierzu kann der Tragkörper 994 z.B. auch über eine Pressverbindung mit dem Betätigungsglied 970 verbunden sein oder auch einstückig mit diesem ausgebildet sein. Illustrativ ist in dem zumindest abschnittsweise hülsenförmig ausgebildeten Betätigungsglied 970 eine Antriebswelle 968 verdrehgesichert aufgenommen, sodass sich das Betätigungsglied 970 bei einer Drehbewegung der Antriebswelle 968 mit dieser mit dreht. Alternativ hierzu können die Antriebswelle 968 und das Betätigungsglied 970 auch einstückig ausgebildet sein.

An einem freien axialen Ende der Antriebswelle 968, das exemplarisch in einem zweiten axialen Endbereich des Betätigungsglieds 970 aufgenommen ist, ist eine Mehrkant-Mitnahmekontur 965 ausgebildet. Ein Außenumfang des zweiten axialen Endbereichs des Betätigungsglieds 970 ist drehbeweglich in einem dem Verriegelungsabschnitt 902 zugeordneten Lagerelement 912, z.B. einem nach Art eines Radiallagers ausgebildeten Wälzlager, gelagert bzw. bevorzugt in dieses eingepresst, sodass die Spannfuttereinheit 904 drehbeweglich an dem Verriegelungsabschnitt 902 gelagert ist. Das Lagerelement 912 wird hierbei in axialer Richtung des Betätigungsglieds 970 zwischen einer an diesem ausgebildeten Ringschulter 926 und einem an diesem befestigten Sicherungsring 927 axial lagefixiert. Es wird jedoch darauf hingewiesen, dass eine geeignete Realisierung der Spannfuttereinheit 904 hinreichend aus dem Stand der Technik bekannt ist, sodass hier auf eine eingehende Beschreibung der Spannfuttereinheit 904 zwecks Knappheit der Beschreibung verzichtet werden kann.

Der Verriegelungsabschnitt 902 ist zur verdrehgesicherten Befestigung und Verriegelung an der Maschinenschnittstelle 850 der Handwerkzeugmaschine 100 ausgebildet und hat beispielhaft einen Grundkörper 915, an dessen Außenumfang mindestens zwei Halteglieder 998, 999 vorgesehen sind, die z.B. nach Art von Bajonetten zur Ausbildung einer Bajonett-Verbindung mit den Bajonetten 852, 854 der Maschinenschnittstelle 850 ausgebildet sind. Der Grundkörper 915 bildet einen Innenraum 916 aus und weist einen Außenumfang 945 auf, an dem illustrativ eine Betätigungs- bzw. Verriegelungshülse 940 angeordnet ist. Darüber hinaus hat der Grundkörper 915 illustrativ eine innere Ringschulter 923 und einen an seinem Innenumfang befestigten, inneren Sicherungsring 928, wobei im Bereich zwischen der Ringschulter 923 und dem Sicherungsring 928 beispielhaft ein Zentrierglied 960 axial lagefixiert ist. Dieses Zentrierglied 960 kann alternativ hierzu auch einstückig mit dem Grundkörper 915 ausgebildet sein, bzw. an diesen angeformt sein. Am Innenumfang 973 des Zentrierglieds 960 ist beispielhaft das Lagerelement 912 angeordnet und bevorzugt eingepresst.

Gemäß einer Ausführungsform sind an dem Verriegelungsabschnitt 902 und der Maschinenschnittstelle 850 der Handwerkzeugmaschine 100 komplementäre geometrische Formen vorgesehen, die dazu ausgebildet sind, zur axialen Zentrierung des Verriegelungsabschnitts 902 an der Maschinenschnittstelle 850 ineinander zu greifen. Diese komplementären geometrischen Formen sind dazu ausgebildet, in axialer Richtung des Verriegelungsabschnitts 902 eine formschlüssige Verbindung auszubilden. Deshalb sind unter komplementären geometrischen Formen im Kontext der vorliegenden Erfindung ganz allgemein geometrische Formen zu verstehen, die zu einer formschlüssigen Verbindung zusammengefügt werden können.

Illustrativ weist das Zentrierglied 960 des Verriegelungsabschnitts 902 mindestens eine zumindest abschnittsweise konusförmige Zentrierhilfe 920 auf. Diese ist zum Eingreifen in die an der Maschinenschnittstelle 850 der Handwerkzeugmaschine 100 vorgesehene, zumindest abschnittsweise trichterförmige Zentrierhilfe 853 vorgesehen und bevorzugt zumindest abschnittsweise nach Art eines Rings 921 mit einem zumindest bereichsweise abgeschrägten Außenumfang 925 an einem axialen Endbereich 962 des Verriegelungsabschnitts 902 ausgebildet. Alternativ hierzu kann die Zentrierhilfe 920 anstelle des Rings 921 z.B. mehrere konusförmige Bogenabschnitte aufweisen, usw.

Zur Montage des Bohrfuttervorsatzes 950 an der Maschinenschnittstelle 850 der Handwerkzeugmaschine 100 wird der Bohrfuttervorsatz 950 in die Richtung 299 von Fig. 8 an die Maschinenschnittstelle 850 herangeführt und derart daran positioniert, dass das Betätigungsglied 970 zur Anlage gegen die Verriegelungshülse 149 der Werkzeugaufnahme 140 der Handwerkzeugmaschine 100 gebracht wird, sodass das freie Ende der Antriebswelle 968 zumindest abschnittsweise in die leere Innenmehrkant-Aufnahme 148 der Werkzeugaufnahme 140 eingreift und an einem vollständigen Eingreifen durch die mindestens eine Verriegelungskugel 846 von Fig. 8 gehindert wird. Diese Verriegelungskugel 846, oder andere geeignete Verriegelungselemente, werden von der Verriegelungshülse 149 der Werkzeugaufnahme 140 auf eine z.B. dem Fachmann bekannte Art und Weise radial einwärts beaufschlagt, um somit ein ungehindertes Einschieben der Antriebswelle 968 in die Innenmehrkant-Aufnahme 148 zu verhindern.

In einem weiteren Schritt wird nun der Bohrfuttervorsatz 950 in die Richtung 299 auf die Maschinenschnittstelle 850 aufgeschoben, z.B. bis der Grundkörper 915 gegen das Befestigungselement 851 der Maschinenschnittstelle 850 anliegt, sodass durch eine Drehung der Betätigungs- bzw. Verriegelungshülse 940 die am Grundkörper 915 vorgesehenen Bajonette 998, 999 in Eingriff mit den Bajonetten 852, 854 des Befestigungselements 851 gebracht und somit an diesen verriegelt werden können, sodass der Verriegelungsabschnitt 902 an der Maschinenschnittstelle 850 lösbar befestigt bzw. verriegelt wird.

Darüber hinaus wird hierbei die zumindest abschnittsweise konusförmige Zentrierhilfe 920 des Verriegelungsabschnitts 902 gegen die zumindest abschnittsweise trichterförmige Zentrierhilfe 853 der Maschinenschnittstelle 850 in Anlage gebracht. Somit kann eine sichere und zuverlässige axiale Zentrierung des Bohrfuttervorsatzes 950 an der Maschinenschnittstelle 850 der Handwerkzeugmaschine 100 ermöglicht werden.

Es wird jedoch erneut darauf hingewiesen, dass die Zentrierhilfen 920 und 853 lediglich beispielhaft konusförmig ausgebildet sind und nicht zur Einschränkung der Erfindung. Vielmehr müssen diese lediglich wie oben beschrieben zur Ausbildung einer formschlüssigen Verbindung geeignete, komplementäre geometrische Formen aufweisen. Dementsprechend kann z.B. die Zentrierhilfe 853 der Maschinenschnittstelle 850 wie bei Fig. 8 und 9 gezeigt trichterförmig ausgebildet sein, während die Zentrierhilfe 920 des Bohrfuttervorsatzes 950 z.B. zylinder- bzw. ringförmig ist. Alternativ hierzu kann z.B. die Zentrierhilfe 920 des Bohrfuttervorsatzes 950 wie oben beschrieben konusförmig, d.h. kegel- oder trichterförmig, ausgebildet sein, während die Zentrierhilfe 853 der Maschinenschnittstelle 850 zylinder- bzw. ringförmig ausgebildet ist, usw.

## Patentansprüche

1. Werkzeugvorsatz (200) mit einer drehend antreibbaren Antriebswelle (268) und einem Verriegelungsabschnitt (202) zur Verriegelung an einer Befestigungsschnittstelle (150) einer Handwerkzeugmaschine (100), die eine Werkzeugaufnahme (140) mit einem Aufnahmekörper (147) zur Aufnahme eines Einsatzwerkzeugs (170) und eine von einem ersten Federelement (220) in eine von der Handwerkzeugmaschine (100) wegweisende axiale Richtung (199) vorgespannte, erste Verriegelungshülse (149) aufweist, **dadurch gekennzeichnet, dass** ein Betätigungsglied (270) mit einem freien Ende (278) vorgesehen ist, das dazu ausgebildet ist, durch Anlage des freien Endes (278) gegen die erste Verriegelungshülse (149), die erste Verriegelungshülse (149) bei einer Befestigung des Werkzeugvorsatzes (200) an der Handwerkzeugmaschine (100) durch Positionieren des Werkzeugvorsatzes (200) auf die Befestigungsschnittstelle (150) gegen eine von dem ersten Federelement (220) aufgebrachte Federkraft in Richtung (299) der Handwerkzeugmaschine (100) zu verschieben.

2. Werkzeugvorsatz nach Anspruch 1, **dadurch gekennzeichnet, dass** das Betätigungsglied (270) die Antriebswelle (268) zumindest abschnittsweise hülsenförmig umgreift.

3. Werkzeugvorsatz nach einem der vorhergehenden Ansprüche, **dadurch gekennzeichnet, dass** die Antriebswelle (268) und das Betätigungsglied (270) einstückig ausgebildet sind.

4. Werkzeugvorsatz nach einem der vorhergehenden Ansprüche, **dadurch gekennzeichnet, dass** die Antriebswelle (268) drehbeweglich in einem Grundkörper (215) gelagert ist, der einen inneren Hohlraum (216) ausbildet und an dessen Außenumfang (245) eine zur Freigabe von mindestens einem Verriegelungselement (232) gegen eine Federkraft eines zweiten Federelements (244) axial verschiebbare, zweite Verriegelungshülse (240) angeordnet ist, wobei die zweite Verriegelungshülse (240) von dem zweiten Federelement (244) in eine von dem Werkzeugvorsatz (100) wegweisende axiale Richtung (299) vorgespannt ist, die bei einer Befestigung des Werkzeugvorsatzes (200) an der Handwerkzeugmaschine (100) in Richtung der Handwerkzeugmaschine (100) weist.

5. Werkzeugvorsatz nach Anspruch 4, **dadurch gekennzeichnet, dass** die Federkräfte des ersten und zweiten Federelements (220, 244) bei der Befestigung des Werkzeugvorsatzes (200) an der Handwerkzeugmaschine (100) in einander entgegengesetzte Richtungen wirken.

6. Werkzeugvorsatz nach Anspruch 4 oder 5, **dadurch gekennzeichnet, dass** das mindestens eine Verriegelungselement (232) mindestens eine zumindest abschnittsweise in eine zugeordnete, radiale Öffnung (233) des Grundkörpers (215) eingreifende Verriegelungskugel aufweist.

7. Werkzeugvorsatz nach einem der vorhergehenden Ansprüche, **dadurch gekennzeichnet, dass** das Betätigungsglied (270) dazu ausgebildet ist, eine Federbeaufschlagung des Werkzeugvorsatzes (200) durch das erste Federelement (220) über die erste Verriegelungshülse (149) im montierten Zustand des Werkzeugvorsatzes (200) an der Handwerkzeugmaschine (100) in der von der Handwerkzeugmaschine (100) wegweisenden axialen Richtung (199) zu ermöglichen.

8. Werkzeugvorsatz nach einem der vorhergehenden Ansprüche, **dadurch gekennzeichnet, dass** die Antriebswelle (268) ausschließlich zur Drehmomentübertragung in dem Aufnahmekörper (147) aufnehmbar ist.

9. Werkzeugvorsatz nach einem der vorhergehenden Ansprüche, der nach Art eines Bohrfutteradapters (500) oder eines Winkelvorsatzes (200) ausgebildet ist.

10. Werkzeugvorsatz nach einem der vorhergehenden Ansprüche, **dadurch gekennzeichnet, dass** der Verriegelungsabschnitt (902) mindestens ein nach Art eines Bajonetts ausgebildetes Halteglied (998, 999) zur verdrehgesicherten Befestigung und Verriegelung an der Befestigungsschnittstelle (850) der Handwerkzeugmaschine (100) aufweist.

11. Werkzeugsystem (300) mit einer Handwerkzeugmaschine (100) und einem Werkzeugvorsatz (200) gemäß einem der Ansprüche 1 bis 10 zur Befestigung an der Handwerkzeugmaschine (100).

## Claims

1. Tool attachment (200) having a drive shaft (268) that is able to be driven in rotation and a locking portion (202) for locking at a fastening interface (150) of a hand-held power tool (100) which has a tool receptacle (140) with a receiving body (147) for receiving an application tool (170) and has a first locking sleeve (149) that is preloaded by a first spring element (220) in an axial direction (199) away from the hand-held power tool (100), **characterized in that** an actuating member (270) having a free end (278) is provided, said actuating member (270) being designed, by abutment of the free end (278) against the first locking sleeve (149), to move the first locking sleeve (149), while the tool attachment (200) is being fastened to the hand-held power tool (100), in the direction (299) of the hand-held power tool (100), counter to a spring force applied by the first spring element (220), by the tool attachment (200) being positioned on the fastening interface (150).

2. Tool attachment according to Claim 1, **characterized in that** the actuating member (270) engages around the drive shaft (268) at least partially in the manner of a sleeve.

3. Tool attachment according to either of the preceding claims, **characterized in that** the drive shaft (268) and the actuating member (270) are formed in one piece.

4. Tool attachment according to one of the preceding claims, **characterized in that** the drive shaft (268) is mounted in a rotatable manner in a main body (215) which forms an inner cavity (216) and on the outer circumference (245) of which there is arranged a second locking sleeve (240) that is axially movable counter to a spring force of a second spring element (244) in order to release at least one locking element (232), wherein the second locking sleeve (240) is preloaded by the second spring element (244) in an axial direction (299) away from the tool attachment, said direction (299) pointing in the direction of the hand-held power tool (100) while the tool attachment (200) is being fastened to the hand-held power tool (100).

5. Tool attachment according to Claim 4, **characterized in that** the spring forces of the first and second spring element (220, 244) act in mutually opposite directions while the tool attachment (200) is being fastened to the hand-held power tool (100).

6. Tool attachment according to Claim 4 or 5, **characterized in that** the at least one locking element (232) has at least one locking ball that engages at least partially in an associated radial opening (233) in the main body (215).

7. Tool attachment according to one of the preceding claims, **characterized in that** the actuating member (270) is designed to allow the tool attachment (200) to be acted upon by the first spring element (220) in the axial direction (199) away from the hand-held power tool (100) via the first locking sleeve (149) in the state of the tool attachment (200) in which it is mounted on the hand-held power tool (100).

8. Tool attachment according to one of the preceding claims, **characterized in that** the drive shaft (268) is able to be received in the receiving body (147) only for torque transmission.

9. Tool attachment according to one of the preceding claims, which is configured in the form of a drill chuck adapter (500) or of an angle attachment (200).

10. Tool attachment according to one of the preceding claims, **characterized in that** the locking portion (902) has at least one retaining member (998, 999), configured in the form of a bayonet, for rotationally secured fastening and locking at the fastening interface (850) of the hand-held power tool (100).

11. Tool system (300) having a hand-held power tool (100) and a tool attachment (200) according to one of Claims 1 to 10 for fastening to a hand-held power tool (100).

## Revendications

1. Accessoire d'outil (200) muni d'un arbre d'entraînement (268) pouvant être entraîné en rotation et d'une section de verrouillage (202) pour le verrouillage au niveau d'une interface de fixation (150) d'une machine-outil portative (100), qui comprend un logement d'outil (140) muni d'un corps de logement (147) pour le logement d'un outil d'insertion (170) et une première douille de verrouillage (149) précontrainte dans une direction axiale (199) détournée de la machine-outil portative (100) par un premier élément ressort (220), **caractérisé en ce qu'**un membre d'actionnement (270) muni d'une extrémité libre (278) est prévu, qui est configuré, par application de l'extrémité libre (278) contre la première douille de verrouillage (149), pour déplacer la première douille de verrouillage (149) en direction (299) de la machine-outil portative (100) à l'encontre d'une force de ressort appliquée par le premier élément ressort (220) lors d'une fixation de l'accessoire d'outil (200) à la machine-outil portative (100) par positionnement de l'accessoire d'outil (200) sur l'interface de fixation (150).

2. Accessoire d'outil selon la revendication 1, **caractérisé en ce que** le membre d'actionnement (270) vient en prise autour de l'arbre d'entraînement (268) au moins en sections sous la forme d'une douille.

3. Accessoire d'outil selon l'une quelconque des revendications précédentes, **caractérisé en ce que** l'arbre d'entraînement (268) et le membre d'actionnement (270) sont configurés d'un seul tenant.

4. Accessoire d'outil selon l'une quelconque des revendications précédentes, **caractérisé en ce que** l'arbre d'entraînement (268) est monté mobile en rotation dans un corps de base (215), qui forme une cavité interne (216) et à la périphérie extérieure (245) duquel une deuxième douille de verrouillage (240), déplaçable axialement à l'encontre d'une force de ressort d'un deuxième élément ressort (244) pour la libération d'au moins un élément de verrouillage (232), est agencée, la deuxième douille de verrouillage (240) étant précontrainte par le deuxième élément ressort (244) dans une direction axiale (299) détournée de l'accessoire d'outil (100), qui est orientée dans la direction de machine-outil portative (100) lors d'une fixation de l'accessoire d'outil (200) à la machine-outil portative (100).

5. Accessoire d'outil selon la revendication 4, **caractérisé en ce que** les forces de ressort du premier et du deuxième élément ressort (220, 244) agissent dans des directions opposées l'une à l'autre lors de la fixation de l'accessoire d'outil (200) à la machine-outil portative (100).

6. Accessoire d'outil selon la revendication 4 ou 5, **caractérisé en ce que** l'au moins un élément de verrouillage (232) comprend au moins une bille de verrouillage pénétrant au moins en sections dans une ouverture radiale associée (233) du corps de base (215) .

7. Accessoire d'outil selon l'une quelconque des revendications précédentes, **caractérisé en ce que** le membre d'actionnement (270) est configuré pour permettre une sollicitation par ressort de l'accessoire d'outil (200) par le premier élément ressort (220) par l'intermédiaire de la première douille de verrouillage (149) dans l'état monté de l'accessoire d'outil (200) sur la machine-outil portative (100) dans la direction axiale (199) détournée de la machine-outil portative (100).

8. Accessoire d'outil selon l'une quelconque des revendications précédentes, **caractérisé en ce que** l'arbre d'entraînement (268) peut être logé dans le corps de logement (147) exclusivement pour le transfert de couple.

9. Accessoire d'outil selon l'une quelconque des revendications précédentes, qui est configuré à la façon d'un adaptateur de mandrin (500) ou d'un accessoire d'angle (200).

10. Accessoire d'outil selon l'une quelconque des revendications précédentes, **caractérisé en ce que** la section de verrouillage (902) comprend au moins un membre de retenue (998, 999) configuré à la façon d'une baïonnette, pour la fixation avec blocage en rotation et le verrouillage au niveau de l'interface de fixation (850) de la machine-outil portative (100).

11. Système d'outil (300) muni d'une machine-outil portative (100) et d'un accessoire d'outil (200) selon l'une quelconque des revendication 1 à 10 destiné à être fixé sur la machine-outil portative (100).
